# EUROPÄISCHE PATENTANMELDUNG

(11) **EP 1 082 938 A2**
(43) Veröffentlichungstag der Anmeldung: **14.03.2001**
(21) Anmeldenummer: 00108767.5
(22) Anmeldetag: 25.04.2000
(51) Int. Cl.: A47L 15/42

(54) **Energiespar-Spülmaschine**

(30) Priorität: 08.09.1999 DE 29915788 U
(71) Anmelder: Kuhlbach, Egon, 65549 Limburg (DE)
(72) Erfinder: Herr Egon Kulbach, 65549 Limburg (NL)
(74) Vertreter: Simon, Peter, Dr.-Jur.

(57) **Zusammenfassung**

Die Erfindung bezieht sich auf eine Energiesparspülmaschine bestehend aus einem Spülraum, in welchem im Bodenteil ein Wasserbad (Brauchwasser) angebracht ist.

In diesem Wasserbad ist ein Wärmetauscher installiert, der das für den Spülvorgang benötigte Frischwasser energiesparend vorheizt.

## Beschreibung

Die Erfindung bezieht sich auf eine Spülmaschinenvorrichtung, der im Oberbegriff des Anspruches näher bezeichneten Art.

Insbesondere im gewerblichen Großküchenbereich werden derzeit Spülmaschinen eingesetzt, die einen aufwendigen Energieverbrauch bedingen, ohne daß eine Energierückgewinnung stattfindet. Dabei wird das Frischwasser in der Regel in einem leistungsstarken Wasserboiler der außerhalb des eigentlichen Spülraumes angebracht ist, aufgeheizt und sodann in das Innere der Spülmaschine in den eigentlichen Spülraum durch Spritzdüsen eingeführt.

Im Inneren des Spülraumes ist am Boden ein Wasserbad angebracht als Vorratsbecken für benötigtes Brauchwasser. Das Brauchwasser wird verwandt um eine Vorspülung der zu reinigenden Gerätschaften durchzuführen. Mit Frischwasser, welches auf 95 Grad erhitzt ist, wird dann lediglich der letzte Spülgang durchgeführt. Durch die Zuführung von Frischwasser in den Spülraum wird das Wasserbad (Brauchwasser) immer auf einem bestimmten Pegel gehalten, so daß immer eine ausreichende Vorratsmenge an Brauchwasser vorhanden ist.

Um einen optimalen Spülgang durchführen zu können, muß das Brauchwasser in dem Wasserbad eine Temperatur zwischen 50 und 60 Grad haben und das Frischwasser stets eine Temperatur von 95 Grad.

Da der Wasserdurchfluß pro Spülgang erheblich ist, bedarf es erheblicher Mengen an Energie, um die vorgegebenen Temperaturwerte (Wasserbad - Brauchwasser 55 Grad, Frischwasser 95 Grad) zu erreichen.

Die derzeit eingesetzten Geräte haben außerhalb des Spülraumes einen leistungsstarken Wasserbeuler, der aus der Wasserleitung kommendes Wasser auf 95 Grad erhitzt und sodann als Frischwasser in den Spülraum abgibt. Zum anderen wird das Wasserbad (Brauchwasser) durch eine zusätzliche Heizspirale im Inneren des Spülraumes auf Temperatur gehalten (55 Grad).

Der Erfindung liegt die Aufgabe zugrunde, eine Spülvorrichtung, der im Oberbegriff näher bezeichneten Art zu schaffen, die durch ein niedrigeren Energieaufwand ausgewiesen ist, bei entsprechender Energieersparnis.

Die Aufgabe wird erfindungsgemäß durch die kennzeichnenden Merkmale der Ansprüche 1 bis 4 gelöst.

Die Erfindung beruht auf der Überlegung, im Wasserbad (Brauchwasser) einen Wärmetauscher zu installieren, der das aus dem allgemeinen Wasserleitungsnetz kommende Wasser vorheizt, bevor es in dem Hauptbeuler außerhalb des Spülraumes gelangt, wo es bis auf 95 Grad aufgeheizt wird.

Der Wärmetauscher ist im Wasserbad (Brauchwasser) installiert bei einer Umgebungstemperatur zwischen ca. 55 Grad.

In diesem Wärmetauscher wird dann bedingt durch die Umgebungstemperatur im Wasserbad das aus der Versorgungsleitung kommende Wasser vorgeheizt, indem die Abwärme des Wasserbades zum Vorheizen im Wärmetauscher genutzt wird.

Der Vorheizeffekt des aus der Versorgungsleitung kommenden Leitungswassers wird dadurch optimiert, als daß in dem Wärmetauscher Kupferleitungen spiralförmig und/oder schlangenförmig verlegt sind, durch die das Leitungswasser zunächst geführt wird, bevor es in den Wärmetauscher austritt und danach als vorgeheiztes Wasser abgeführt wird in den Hauptboiler, der außerhalb des Spülraumes installiert ist. Der Wärmetauscher selbst muß so ausgestaltet sein, als daß der Ummantelungsdurchmesser möglichst gering gehalten wird, da ansonsten der Wärmetauscheffekt vom Wirkungsgrad her zu gering ausfällt. Je nach Leistungsfähigkeit der Spülmaschine kann der Wärmetauscher zusätzlich mit einer internen Heizspirale ausgestattet werden, als Zusatzheizquelle, die jedoch für den Normalbetrieb entbehrlich ist.

Durch den Vorheizeffekt wird erreicht, daß entsprechend der Spülintervalle stets vorgeheiztes Wasser von mindestens 30 Grad bewerkstelligt wird durch Einsatz des Wärmetauschers und dadurch bedingt eine wesentlich niedrigere Heizleistung für den Hauptboiler außerhalb der Spülmaschine benötigt wird.

So werden die gleichen Spülleistungen erreicht wie zum Beispiel mit 6 KW anstatt 8 KW bei einem herkömmlichen Gerät. Insbesondere bedingt durch die niedrigeren Anschlußwerte wird ein Optimum an Energieersparnis erreicht.

Die Erfindung wird anhand der Zeichnungen näher erläutert. Es zeigt:
**Figur 1:**
   Eine Vorderansicht der Spülmaschine bei Hinwegdenken der Ummantelung und Öffnungsvorrichtungen, den eigentlichen Spülraum (1), das gefüllte Wasserbad (2), die Spritzdüsen (3), installiert auf den rotierenden Leitungen und Haltevorrichtungen, den Wärmetauscher (4), die Kuperleitung im Wärmetauscher (5), den Überlaufstutzen im Wasserbad (6), den Boiler außerhalb des Spülraumes (7), die Leitungswasserzufuhr zum Boiler (8), Zuleitung des vorgeheizten Wassers zum Hauptboiler (9), die Zuleitung des auf 95 Grad aufgeheizten Wassers zu den Spritzdüsen (10).
**Figur 2:**
   zeigt einen Querschnitt des Wärmetauschers, die Kupferleitung im Wärmetauscher (5), die Leitungswasserzufuhr (8), das vorgeheizte Wasser zum Hauptboiler (9), den Wärmetauscher selbst (4), die wahlweise Zusatzheizspirale im Wärmetauscher (12), den möglichst gering zu haltenden Ummantelungsdurchmesser (11).

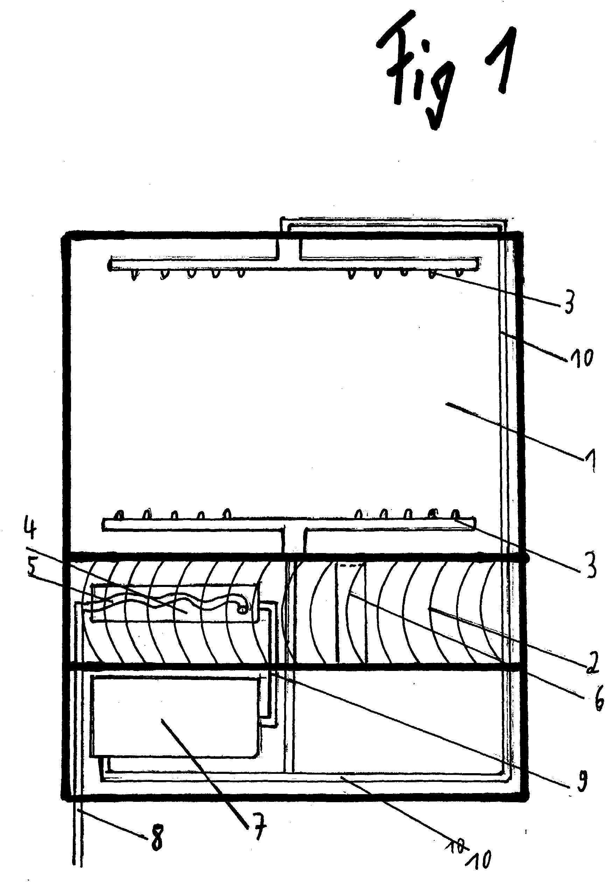

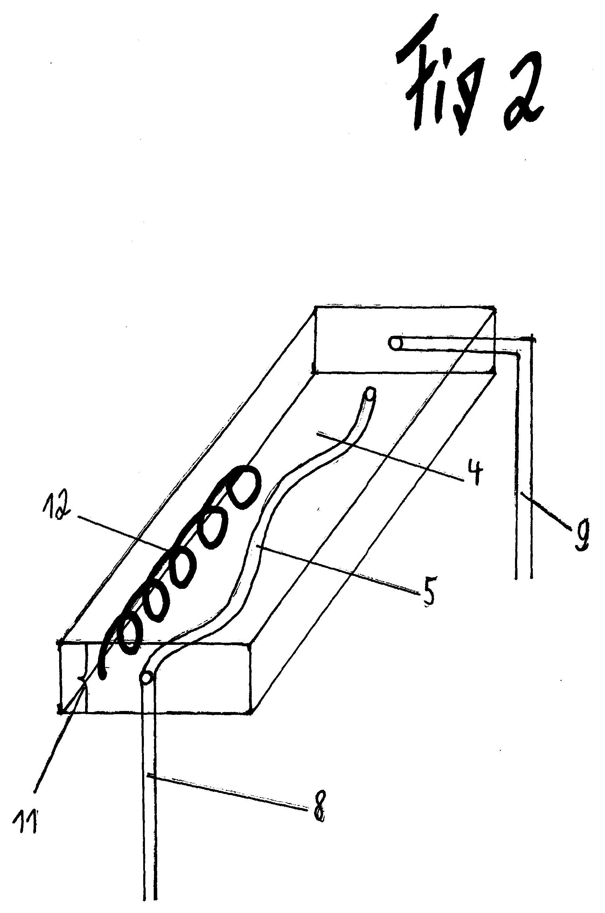

## Patentansprüche

1. Geschlossene Spülvorrichtung mit am Bodenteil des Spülraumes installiertem Wasserbad (Brauchwasser); in diesem Wasserbad installierten Wärmetauscher, in dem Frischwasser vorgeheizt wird. In dem Wärmetauscher angebrachte Kupferleitungen, durch die das Leitungswasser vor Austritt in den Wärmetauscher geführt wird. Dem Wärmetauscher nachgeschaltet ein Warmwasserboiler außerhalb des Spülraumes, der mit durch den Wärmetauscher vorgeheizten Wasser gespeist wird.

2. Anspruch 1 dadurch gekennzeichnet, daß der Wärmetauscher in dem Wasserbad (Brauchwasser) voll umflutet installiert ist.

3. Anspruch 1 dadurch gekennzeichnet, daß die Kupferleitung in dem Wärmetauscher spiralförmig und/oder schlangenförmig verläuft, um den Wärmetauscheffekt zu optimieren.

4. Anspruch 1 dadurch gekennzeichnet, daß der Wärmetauscher einen möglichst geringen Ummantelungsdurchmesser hat und wahlweise mit einer zusätzlichen Heizspirale versehen ist.
